# FASCICULE DE BREVET EUROPEEN

(11) **EP 3 019 273 B1**
(45) Date de publication et mention de la délivrance du brevet: **24.03.2021**
(21) Numéro de dépôt: 14758602.8
(22) Date de dépôt: 11.07.2014
(51) Int. Cl.: B01J 31/16, B01J 31/22, C07F 7/08, C07F 9/6584

(54) **NOUVEAUX CATALYSEURS A LIGAND SILENE**
NEUARTIGE KATALYSATOREN MIT EINEM SILENLIGANDEN
NOVEL CATALYSTS HAVING A SILENE LIGAND

(30) Priorité: 12.07.2013 FR 1356886
(43) Date de publication de la demande: 18.05.2016
(73) Titulaire: ELKEM SILICONES France SAS, 69003 Lyon (FR); Centre National de la Recherche Scientifique (C.N.R.S.), 75016 Paris (FR)
(72) Inventeur: BACEIREDO, Antoine, F-31500 Toulouse (FR); KATO, Tsuyoshi, F-31400 Toulouse (FR); RODRIGUEZ, Ricardo, E-50660 Tauste (Zaragoza) (ES); NAKATA, Norio, Saitama 331-0074 (JP); MARROT, Sébastien, F-69008 Lyon (FR); SAINT-JALMES, Laurent, F-69390 Vourles (FR)
(74) Mandataire: Plasseraud IP
(86) Numéro de dépôt international: PCT/FR2014/051788
(87) Numéro de publication internationale: WO 2015/004397

(56) Documents cités:
- WO-A1-01/42258
- DMITRY BRAVO-ZHIVOTOVSKII ET AL: "The Direct Synthesis of a Silene-Organometallic Complex", ANGEWANDTE CHEMIE INTERNATIONAL EDITION, vol. 43, no. 6, 30 janvier 2004 (2004-01-30), pages 745-748, XP055107863, ISSN: 1433-7851, DOI: 10.1002/anie.200353048
- NAKATA, NORIO ET AL: "A Stable Silene Substituted by Strong .pi.-Donors at the Silicon Center", ANGEWANDTE CHEMIE, INTERNATIONAL EDITION , 52(41), 10840-10844 CODEN: ACIEF5; ISSN: 1433-7851, 2013, XP002732549, DOI: 10.1002/ANIE.201304594

## Description

### DOMAINE DE L'INVENTION

L'invention concerne l'utilisation d'un nouveau type de complexes métalliques comme catalyseurs, notamment comme catalyseurs d'hydrosilylation. Plus spécifiquement, la présente invention concerne l'utilisation de complexes métalliques ayant au moins un ligand de type silène.

### ART ANTERIEUR

Lors d'une réaction d'hydrosilylation (également appelée polyaddition), un composé comprenant au moins une insaturation réagit avec un composé comprenant au moins une fonction hydrogénosilyle, c'est-à-dire un atome d'hydrogène lié à un atome de silicium. Cette réaction peut par exemple être décrite dans le cas d'une insaturation de type alcène par : 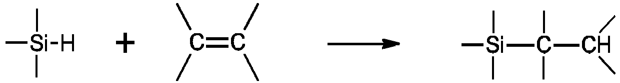 ou dans le cas d'une insaturation de type alcyne par :

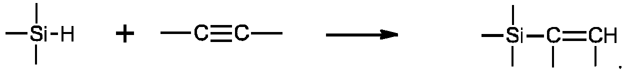

L'hydrosilylation de composés insaturés est réalisée par catalyse. Typiquement, le catalyseur approprié pour cette réaction est un catalyseur au platine. Actuellement, la plupart des réactions industrielles d'hydrosilylation sont catalysées par le complexe de platine de Karstedt, de formule générale Pt₂(divinyltétraméthyldisiloxane)₃ (ou en abrégé Pt₂(DVTMS)₃) :

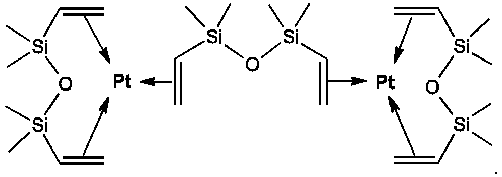

Au début des années 2000, la préparation de complexes de platine - carbène de formule générale : 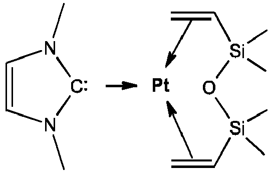 a permis d'avoir accès à des catalyseurs plus stables (voir par exemple la demande internationale de brevet WO 01/42258).

Toutefois, l'utilisation de catalyseurs au platine est toujours problématique. Il s'agit d'un métal cher, en voie de raréfaction et dont le coût fluctue énormément. Son utilisation à l'échelle industrielle est difficile. On souhaite donc diminuer autant que possible la quantité de catalyseur nécessaire à la réaction, sans pour autant diminuer le rendement et la vitesse de la réaction.

Par ailleurs, on souhaite disposer d'un catalyseur stable au cours de la réaction. Il a été constaté que, lors de la réaction catalysée, le platine métallique pouvait précipiter, ce qui a pour conséquence la formation de colloïdes insolubles dans le milieu réactionnel. Le catalyseur est alors moins actif. De plus, ces colloïdes forment un trouble dans le milieu réactionnel, et les produits obtenus ne sont pas satisfaisants esthétiquement car ils sont colorés.

En outre, lors des réactions d'hydrosilylation avec le catalyseur de Karstedt, on a constaté la formation de sous-produits indésirables résultant de l'isomérisation d'une double liaison oléfinique et/ou de réactions d'hydrogénation. On souhaite également que le catalyseur ne favorise pas de réactions secondaires.

Dans ce contexte, un des objectifs de la présente invention est de proposer un nouveau type de catalyseur, adapté notamment à la catalyse des réactions d'hydrosilylation. Avantageusement, ce catalyseur peut être utilisé en plus faible quantité que les catalyseurs existants, tout en conservant au moins la même efficacité. En outre, le nouveau catalyseur peut avantageusement être stable dans le milieu réactionnel, ne pas former de colloïdes, et permettre de limiter les réactions secondaires.

### BREVE DESCRIPTION DE L'INVENTION

Ces objectifs ont été atteints grâce à la mise en œuvre d'un nouveau type de catalyseur. La présente invention a pour objet l'utilisation en tant que catalyseur d'un complexe métallique comprenant au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, caractérisé en ce qu'au moins un ligand comprend une structure silène qui est un silène - ylure de phosphore, ledit ligand étant le composé de formule (V) : 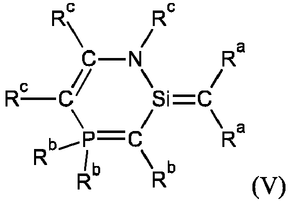 dans laquelle chaque Ra et chaque Rb est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque Rc peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes Ra, les groupes Rb et les groupes Rc, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.
En outre, l'invention a également pour objet d'une part un procédé d'hydrosilylation d'un composé insaturé comprenant au moins une fonction alcène et/ou au moins une fonction alcyne, avec un composé comprenant au moins une fonction hydrogénosilyle, ledit procédé étant caractérisé par le fait qu'il est catalysé par un complexe métallique tel que défini ci-dessus,
et d'autre part une composition comprenant :
- au moins un composé insaturé comprenant au moins une fonction alcène et/ou au moins une fonction alcyne,
- au moins un composé comprenant au moins une fonction hydrogénosilyle, et
- un catalyseur choisi parmi les complexes métalliques tels que définis ci-dessus.

Enfin, un complexe métallique tel que défini ci-dessus est également un objet de la présente invention.

### DESCRIPTION DETAILLEE DE L'INVENTION

Selon un premier aspect, la présente invention concerne donc une utilisation particulière de certains complexes métalliques. Ces complexes métalliques sont caractérisés par le fait qu'ils comprennent au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, et en ce qu'au moins un ligand comprend une structure silène qui est un silène - ylure de phosphore, ledit ligand étant le composé de formule (V) : 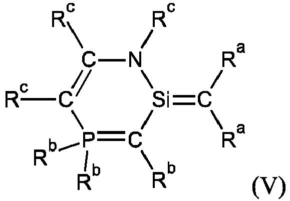 dans laquelle chaque Ra et chaque Rb est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque Rc peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes Ra, les groupes Rb et les groupes Rc, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

Ces complexes métalliques peuvent être représentés par la formule générale (I) :

[Mₐ(Lig)_{b}]^{c} (I)

dans laquelle :
- M représente un métal choisi parmi les métaux dans le groupe constitué par Pt, Pd, Ni, Rh, Ru, Os et Ir ;
- le symbole Lig représente un ligand du métal M ;
- a est 1, 2 ou 3 ;
- b est un nombre entier allant de 1 à un nombre égal à 5 fois la valeur de a ;
- c correspond à la charge totale du complexe métallique qui peut être 0 ou un nombre entier positif allant de +1 à +6 ;
étant entendu que, si b est supérieur ou égal à 2, Lig peut représenter des ligands identiques ou différents,
caractérisé en ce qu'au moins un ligand Lig est un ligand qui comprend une structure silène qui est un silène - ylure de phosphore, ledit ligand étant le composé de formule (V) : 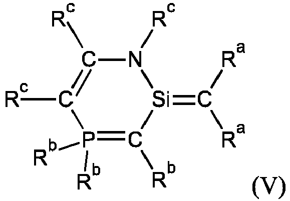 dans laquelle chaque Ra et chaque Rb est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque Rc peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes Ra, les groupes Rb et les groupes Rc, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

Le métal du complexe métallique selon l'invention est choisi dans le groupe constitué par Pt, Pd, Ni, Rh, Ru, Os et Ir, plus préférentiellement dans le groupe constitué par Pt, Pd, Ni, Rh et Ru, et encore plus préférentiellement dans le groupe constitué par Pt, Pd et Ru. De façon très préférée, le métal est Pt et le complexe métallique de la présente invention est un complexe de platine.

Le complexe peut comprendre un seul atome métallique, ce qui signifie que le symbole « a » vaut 1 dans la formule générale (I). Toutefois, il est également possible que le complexe métallique comprenne plusieurs atomes métalliques, notamment si au moins un des ligands du complexe est un ligand pontant ou un ligand polydentate.

Le complexe métallique selon l'invention peut être neutre (ce qui signifie que le symbole « c » vaut 0 dans la formule générale (I)), ou bien chargé (le symbole « c » dans la formule générale (I) est différent de 0, et vaut +1, +2, +3, +4, +5 ou +6). Dans ce dernier cas, le complexe métallique peut être associé à un ou plusieurs contre-ions.

Un ou plusieurs ligands viennent complexer le ou les atomes métalliques. Le complexe métallique selon l'invention est caractérisé en ce qu'au moins un ligand comprend une structure silène qui est un silène - ylure de phosphore, ledit ligand étant le composé de formule (V) : 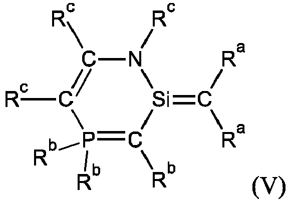 dans laquelle chaque Ra et chaque Rb est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque Rc peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes Ra, les groupes Rb et les groupes Rc, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy. Dans la suite, ce ligand est noté « Ls ».

Un composé silène est un composé chimique comprenant un atome de silicium et un atome de carbone liés par une double liaison : 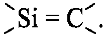 La synthèse des premiers composés à double liaison silicium-carbone remonte au début des années 80. Depuis, ces composés ont fait l'objet de nombreuses études, mais ce n'est que dans les années 90 qu'ont été décrits pour la première fois des complexes métalliques ayant un ligand de type silène. La nature des interactions entre l'atome métallique et le ligand de type silène est étudiée par exemple dans l'article de Bravo-Zhivotovskii et al : « The Direct Synthesis of a Silene-Organometallic Complex » Angew. Chem. Int. Ed. 2004, 43, 745-748. Il ressort de cette publication qu'un complexe métallique avec un ligand de type silène peut être considéré comme un complexe de type π ou comme un composé de type cyclopropanique lié par des liaisons de types σ. Toutefois, dans ce qui suit, la complexation entre le ligand Ls et un atome métallique M sera représenté de façon schématique par :

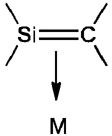

A la connaissance des inventeurs, aucune application en catalyse de complexe métallique avec un ligand de type silène n'a été décrite.

Par « atome d'halogène », on entend selon l'invention un atome choisi dans le groupe constitué par le fluor, le chlore, le brome et l'iode.

Par « alkyle », on entend selon l'invention une chaîne hydrocarbonée saturée, linéaire ou ramifiée contenant de 1 à 20 atomes de carbone, de préférence de 1 à 8 atomes de carbone.

Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 3 à 8 atomes de carbone. Lorsque le groupe cycloalkyle est polycyclique, les multiples noyaux cycliques peuvent être rattachés les uns aux autres par une liaison covalente et/ou par un atome spiranique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane.

Par « cycloalkyle-alkyle », on entend selon l'invention un groupe alkyle tel que défini ci-avant substitué par un groupe cycloalkyle également tel que défini ci-avant.

Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle.

Par « aryle-alkyle », on entend selon l'invention un groupe alkyle tel que défini ci-avant substitué par un groupe cycloalkyle également tel que défini ci-avant.

Par « acyle », on entend selon l'invention un groupe alkyle, cycloalkyle ou aryle tel que défini ci-avant lié à un groupe C=O.

Par « alcoxy », on entend selon l'invention un groupe alkyle tel que défini ci-avant lié à un atome d'oxygène. Un groupe alcoxy peut être choisi dans le groupe constitué par méthoxy, éthoxy, propoxy et butoxy.

Par « amine », on entend selon l'invention un groupe amine primaire ou bien un groupe amine secondaire, tertiaire ou quaternaire dont le ou les substituants sont choisis parmi un groupe alkyle tel que défini ci-avant.

La structure silène du ligand est un silène - ylure de phosphore.

Par « silène - ylure de phosphore », on entend un composé comprenant consécutivement un groupement silène 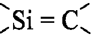 et un groupement ylure de phosphore 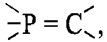 l'atome de carbone du groupement ylure de phosphore étant lié à l'atome de silicium du groupement silène. Ainsi, une structure silène - ylure de phosphore peut être représentée schématiquement par :

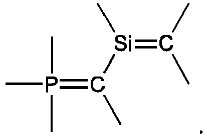

A la connaissance des inventeurs, aucun complexe métallique ayant comme ligand un composé de structure silène - ylure de phosphore n'a été décrit auparavant. C'est pourquoi les complexes métalliques tels que définis ci-dessus sont également des objets de la présente invention. Ce complexe métallique objet de l'invention peut être de préférence tel que décrit ci-dessous dans le cadre de son utilisation comme catalyseur.

Le ligand Ls est un composé de formule (V) : 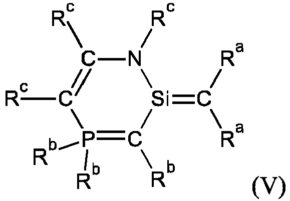 dans laquelle chaque R^{a} et chaque R^{b} sont tels que définis précédemment,
et chaque R^{c} peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy.
étant entendu que :
- dans chaque groupe R^{c}, un ou plusieurs atomes de carbone peuvent être remplacés par un atome de silicium Si,
- dans chaque groupe R^{c}, un ou plusieurs insaturations peuvent être présentes,
- deux groupes ou plus choisis parmi les groupes R^{a}, les groupes R^{b} et les groupes R^{c}, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

Tout particulièrement, le ligand Ls peut être le composé de formule (VI) : 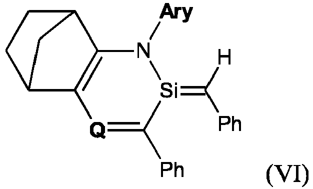 dans laquelle le symbole « Q » représente 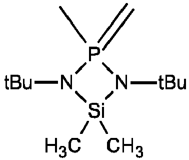 et le symbole « Ary » représente

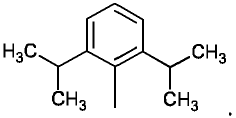

Dans tous les cas, si le ligand Lₛ contient des atomes asymétriques (notamment de carbone, d'azote ou de phosphore), Lₛ peut être un isomère pur, par exemple un énantiomère ou un diastéréomère, ou un mélange d'isomères, notamment un mélange racémique. Il peut être particulièrement intéressant de disposer du ligand Ls sous la forme d'un isomère pur car les complexes métalliques comprenant ce ligand peuvent avoir des propriétés intéressantes en synthèse et en catalyse asymétrique.

Par ailleurs, pour le ligand Ls qui est un silène - ylure de phosphore, le groupement ylure de phosphore peut être préparé par toute méthode de synthèse connue de l'homme du métier. Typiquement, les ylures de phosphore sont préparés par déprotonation d'un sel de phosphonium à l'aide par exemple d'une base forte telle qu'un organolithien. Les groupements silène et ylure de phosphore peuvent être obtenus en une seule étape, de façon concertée, ou en plusieurs étapes.

Le complexe métallique dont l'utilisation est un objet de la présente invention comprend au moins un atome métallique choisi parmi les métaux dans le groupe constitué par Pt, Pd, Ni, Rh, Ru, Os et Ir et au moins un ligand Ls tel que défini ci-dessus. Le complexe métallique peut comprendre un seul ligand Ls ou plusieurs ligands Ls. Si plusieurs ligands Lₛ sont présents, ceux-ci peuvent être identiques ou différents. En outre, le complexe métallique peut comprendre un ou plusieurs autres ligands. Le nombre et la nature des ligands sont adaptés à la valence de l'atome métallique.

De préférence, le complexe métallique selon l'invention comprend un ou plusieurs autres ligands choisis indépendamment les uns des autres dans le groupe constitué par le monoxyde de carbone, les phosphines, les aminés, le dihydrogène, les halogènes, les ions carboxylates, les ions sulfonates, les radicaux amides, les radicaux alcoolates, les radicaux acétlylacétonate, les radicaux alkyles ayant de 1 à 7 atomes de carbone, le monoxyde d'azote, les nitriles, les isonitriles, les mono et di-oléfines, les alcynes et les radicaux aromatiques. Le ligand peut être monodentate ou polydentate, en particulier bidentate, tridentate ou quadridentate.

Le complexe métallique selon l'invention peut comprendre comme ligand le divinlytétraméthyldisiloxane (DVTMS), de formule :

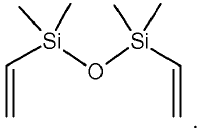

Selon un mode de réalisation tout à fait particulier, le complexe métallique est le composé de formule (VII) : 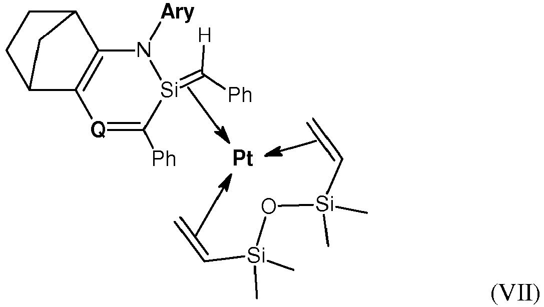 dans laquelle le symbole « Q » représente 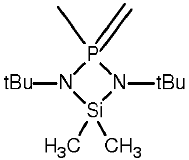 et le symbole « Ary » représente

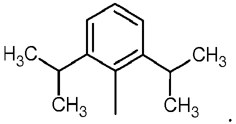

Les complexes métalliques selon l'invention peuvent être préparés à partir de complexes connus de l'état de la technique par échange de ligand, c'est-à-dire par addition d'au moins un ligand Lₛ à un complexe métallique précurseur approprié, en solution. Le complexe métallique précurseur peut notamment être choisi parmi les complexes métalliques à ligand divinyle, les complexes métalliques à ligand cyclooctadiène et les complexes métalliques à ligand oléfine et bisphosphine. De préférence, le complexe métallique précurseur est choisi parmi les complexes métalliques de formule M(COD)₂ et les complexes métalliques de formule M₂(DVTMS)₃, « M » représentant un métal des colonnes 8, 9 et 10 du tableau périodique des éléments, « COD » représentant le ligand cycloocta-1,5-diène et « DVTMS » représentant le ligand 1,3-divinyl-1,1,3,3-tétraméthyldisiloxane. De façon très préférée, le complexe métallique précurseur est le complexe de platine de Karstedt Pt₂(DVTMS)₃.

L'utilisation de ces complexes métalliques en tant que catalyseurs est un objet de la présente invention. En particuliers, il peut s'agir de catalyseurs pour des réactions connues par l'homme du métier comme pouvant être catalysées par des catalyseurs organométalliques à ligands de type carbène. Les inventeurs ont constaté que, de façon tout à fait inattendue, les complexes métalliques selon l'invention permettaient de catalyser des réactions comme l'hydrosilylation de façon aussi efface, et même parfois plus efficace, que les catalyseurs classiquement utilisés, tels que le catalyseur de Karstedt, tout en employant une quantité de catalyseur plus faible. Ce résultat est particulièrement avantageux car il permet de diminuer la concentration en catalyseur, donc en platine, dans le milieu réactionnel sans affecter le rendement de la réaction. Par ailleurs, lors de la mise en œuvre de ces catalyseurs, la formation de colloïdes n'a pas été observée et la formation de produits secondaires n'a pas été favorisée, voire a été diminuée par rapport à celle obtenue avec les catalyseurs classiquement utilisés, tels que le catalyseur de Karstedt.

La présente invention peut également concerner un catalyseur comprenant au moins un complexe métallique tel que décrit ci-dessus, et une méthode de mise en œuvre d'une réaction chimique, caractérisée par le fait la réaction est catalysée par un de ces complexes métalliques.

Parmi les différentes réactions pouvant être catalysées par le complexe métallique décrit ici, l'invention a tout particulièrement pour objet un procédé d'hydrosilylation d'un composé insaturé comprenant au moins une fonction alcène et/ou au moins une fonction alcyne, avec un composé comprenant au moins une fonction hydrogénosilyle (≡Si-H), ledit procédé étant caractérisé par le fait qu'il est catalysé par un complexe métallique tel que défini ci-dessus. Dans ce procédé, le complexe métallique est de préférence un complexe de platine.

Selon un premier mode de réalisation, le composé comprenant au moins une fonction hydrogénosilyle est un composé silane ou polysilane comprenant au moins un atome d'hydrogène lié à un atome de silicium. Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif ≡Si-Si≡.

Selon un deuxième mode de réalisation, le composé comprenant au moins une fonction hydrogénosilyle est un composé siloxane comprenant au moins un atome d'hydrogène lié à un atome de silicium. Par composé « siloxane », on entend dans la présente invention les composés chimiques possédant au moins un motif ≡Si-O-Si≡. Le composé siloxane comprend au moins deux atomes de silicium, de préférence au moins 3 atomes de silicium ou plus. Ledit composé siloxane peut avantageusement être un polyorganosiloxane (couramment dénommés POS) comprenant au moins un motif de formule (VIII) :

H_{d}UₑSiO_{(4-(d+e))/2} (VIII)

dans laquelle :
- U représente un radical monovalent différent d'un atome d'hydrogène,
- d et e représentent des nombres entiers, d valant 1 ou 2, e valant 0, 1 ou 2 et (d+e) valant 1, 2 ou 3 ;
et éventuellement d'autres motifs de formule (IX) :

U_{f}SiO_{(4-f)/2} (IX)

dans laquelle U a la même signification que ci-dessus, et f représente un nombre entier compris entre 0 et 3.

Il est entendu dans la formule (VIII) et dans la formule (IX) ci-dessus que, si plusieurs groupes U sont présents, ils peuvent être identiques ou différents les uns des autres.

Dans la formule (VIII), le symbole d peut préférentiellement valoir 1.

De plus, dans la formule (VIII) et dans la formule (IX), U peut représenter un radical monovalent choisi dans le groupe constitué par un groupe alkyle ayant 1 à 8 atomes de carbone, éventuellement substitué par au moins un atome d'halogène, et un groupe aryle. U peut avantageusement représenter un radical monovalent choisi dans le groupe constitué par méthyle, éthyle, propyle, 3,3,3-trifluoropropyle, xylyle, tolyle et phényle. Des exemples de motifs de formule (VIII) sont les suivants : H(CH₃)₂SiO_{1/2}, HCH₃SiO_{2/2} et H(C₆H₅)SiO_{2/2}.

Le polyorganosiloxane peut présenter une structure linéaire, ramifié, cyclique ou en réseau.

Des exemples de polyorganosiloxanes pouvant être des composés siloxane comprenant au moins un atome d'hydrogène lié à un atome de silicium sont :
- un poly(diméthylsiloxane) à extrémités hydrogénodiméthylsilyles;
- un poly(diméthylsiloxane-co-méthylhydrogénosiloxane) à extrémités triméthylsilyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.
De préférence, le composé comprenant au moins une fonction hydrogénosilyle est un composé polyorganosiloxane comprenant par molécule au moins deux fonctions hydrogénosilyle (Si-H).

Enfin, selon un troisième mode de réalisation, le composé comprenant au moins une fonction hydrogénosilyle est un polymère organique comprenant des fonctions hydrogénosilyles en positions terminales. Le polymère organique peut par exemple être un polyoxoalkylène, un polymère hydrocarboné saturé ou un poly(méth)acrylate. Des polymères organiques comprenant des fonctions réactives en positions terminales sont notamment décrits dans les demandes de brevet US 2009/0182099 et US 2009/0182091.

Le second des réactifs de la réaction d'hydrosilylation est un composé insaturé. Le composé insaturé selon l'invention est un composé chimique comprenant au moins une insaturation ne faisant pas partie d'un cycle aromatique. Le composé insaturé comprend au moins une fonction alcène et/ou une fonction alcyne. Tout composé comprenant au moins une fonction alcène et/ou une fonction alcyne peut être utilisé dans le procédé selon l'invention, dans la mesure où il ne contient pas de fonction chimique réactive pouvant gêner, voire empêcher la réaction d'hydrosilylation.

Selon un mode de réalisation, le composé insaturé comprend une ou plusieurs fonctions alcène et de 2 à 40 atomes de carbone. Selon un autre mode de réalisation, le composé insaturé comprend une ou plusieurs fonctions alcynes et de 2 à 40 atomes de carbone.

Le composé insaturé peut de façon préférée être choisi dans le groupe constitué par l'acétylène, les acrylates et les méthacrytales d'alkyles en C₁ à C₄, l'acide acrylique ou méthacrylique, les alcènes, de préférence l'octène et plus préférentiellement le 1-octène, l'alcool allylique, l'allylamine, l'éther d'allyle et glycidyle, l'éther d'allyle et de pipéridine, préférentiellement l'éther d'allyle et de pipéridine stériquement encombrée, les styrènes, préférentiellement l'alpha-méthyl-styrène, le 1,2-époxy-4-vinylcyclohexane, le chlorure d'allyle, les alcènes chlorés, de préférence le chlorure d'allyle, et les alcènes fluorés, de préférence de 4,4,5,5,6,6,7,7,7-nonafluoro-1-heptène.

Le composé insaturé peut également être choisi parmi les composés comprenant plusieurs fonctions alcènes, de préférence deux ou trois fonctions alcènes, et de façon particulièrement préférée choisi parmi les composés suivants : 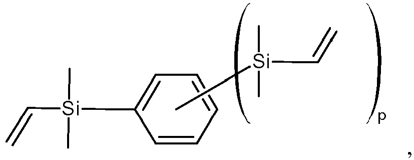 avec p valant 1 ou 2, 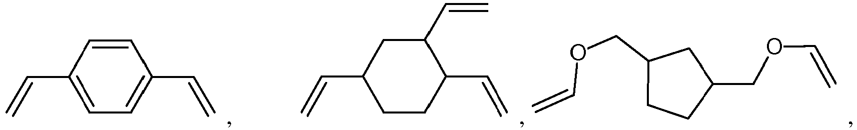 et 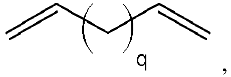 avec q valant de 2 à 6, de préférence q valant 2 ou 4.

Le composé insaturé peut également être choisi parmi les composés polyorganosiloxanes (couramment dénommés POS) comportant des motifs de formule (X) :

A_{g}UₕSiO_{(4-(g+h))/2} (X)

dans laquelle :
- les radicaux A, semblables ou différents, représentent un radical alcényle ou alcynyle, linéaire ou ramifié, contenant entre 2 et 6 atomes de carbone ;
- les radicaux U, semblables ou différents, représentent un radical monovalent différent d'un atome d'hydrogène,
- g et h représentent des nombres entiers, g valant 1 ou 2, h valant 0, 1 ou 2 et (g+h) valant 1, 2 ou 3 ;
et comportant éventuellement d'autres motifs de formule (XI) :

UᵢSiO_{(4-i)/2} (XI)

dans laquelle U a la même signification que ci-dessus, et i représente un nombre entier compris entre 0 et 3.

Dans la formule (X) et dans la formule (XI), U peut représenter un radical monovalent choisi dans le groupe constitué par un groupe alkyle ayant 1 à 8 atomes de carbone, éventuellement substitué par au moins un atome d'halogène, et un groupe aryle. U peut avantageusement représenter un radical monovalent choisi dans le groupe constitué par méthyle, éthyle, propyle, 3,3,3-trifluoropropyle, xylyle, tolyle et phényle.

Des exemples de polyorganosiloxanes pouvant être des composés insaturés sont :
- un poly(diméthylsiloxane) à extrémités diméthylvinylsilyles ;
- un poly(diméthylsiloxane-co-méthylphénylsiloxane) à extrémités diméthylvinylsilyles ;
- un poly(diméthylsiloxane-co-méthylvinylsiloxane) à extrémités diméthylvinylsilyles ;
- un poly(diméthylsiloxane-co-méthylvinylsiloxane) à extrémités triméthylsilyles ; et
- un poly(méthylvinylsiloxane) cycliques.

Selon un mode de réalisation particulier de la présente invention, il est possible que le composé insaturé, comprenant au moins une fonction alcène et/ou au moins une fonction alcyne, et le composé comprenant au moins une fonction hydrogénosilyle soient un seul et même composé, comprenant d'une part au moins une fonction alcène et/ou au moins une fonction alcyne, et d'autre part au moins un atome de silicium et au moins un atome d'hydrogène lié à l'atome de silicium. Ce composé peut alors être qualifié de « bifonctionnel », et il est susceptible de réagir sur lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction alcène et/ou au moins une fonction alcyne, et d'autre part au moins un atome de silicium et au moins un atome d'hydrogène lié à l'atome de silicium, ledit procédé étant caractérisé par le fait qu'il est catalysé par un complexe métallique tel que décrit ci-dessus.

Des exemples de polyorganosiloxanes pouvant être des composés bifonctionnels sont :
- un poly(diméthylsiloxane-co-hydrogénométhylsiloxane-co-vinylméthylsiloxanes) à extrémités diméthylvinylsilyles;
- un poly(diméthylsiloxane-co-hydrogénométhylsiloxane-co-vinylméthylsiloxanes) à extrémités diméthylhydrogénosilyles ; et
- un poly(diméthylsiloxane-co-hydrogénométhylsiloxane-co-propylglycidylétherméthylsiloxane) à extrémités triméthylsilyles.

Dans ce qui suit, lorsqu'il est question de la mise en œuvre du composé insaturé et du composé comprenant au moins une fonction hydrogénosilyle, l'homme du métier comprendra qu'on entend également la mise en œuvre d'un composé bifonctionnel.

La réaction d'hydrosilylation peut être réalisée dans un solvant ou en l'absence de solvant. En variante, un des réactifs, par exemple le composé insaturé, peut jouer le rôle de solvant. Des solvants appropriés sont des solvants miscibles avec le composé comprenant au moins une fonction hydrogénosilyle.

La réaction d'hydrosilylation peut être conduite à une température comprise entre 15°C et 300°C, préférentiellement entre 20°C et 240°C, plus préférentiellement entre 70°C et 200°C, plus préférentiellement entre 50°C et 140°C, et encore plus préférentiellement entre 50°C et 100°C.

La présente invention a également pour objet un moyen spécialement conçu pour la mise en œuvre du procédé d'hydrosilylation décrit ci-avant. Ce moyen consiste en une composition comprenant :
- au moins un composé insaturé comprenant au moins une fonction alcène et/ou au moins une fonction alcyne,
- au moins un composé comprenant au moins une fonction hydrogénosilyle (=Si-H), et
- un catalyseur choisi parmi les complexes métalliques tels que décrits ci-dessus.

Cette composition forme le milieu réactionnel dans lequel la réaction d'hydrosilylation selon l'invention peut intervenir. Pour ce faire, cette composition peut être chauffée comme décrit ci-avant.

La quantité relative de composé insaturé et de composé comprenant au moins une fonction hydrogénosilyle peut être contrôlée de façon à assurer un taux de réaction des insaturations avec des fonctions hydrogénosilyles. Le rapport molaire des fonctions Si-H des composés comprenant au moins une fonction hydrogénosilyle sur les fonctions alcènes et alcynes des composés insaturés est compris de façon préférée entre 1:100 et 100:1, et de façon plus préférée entre 1:10 et 10:1. Selon un mode de réalisation, le rapport molaire des fonctions Si-H des composés comprenant au moins une fonction hydrogénosilyle sur les fonctions alcènes et alcynes des composés insaturés est strictement inférieur à 1. Les fonctions Si-H sont ici en défaut par rapport aux fonctions insaturées. Selon un autre mode de réalisation, le rapport molaire des fonctions Si-H des composés comprenant au moins une fonction hydrogénosilyle sur les fonctions alcènes et alcynes des composés insaturés est strictement supérieur à 1. Les fonctions Si-H sont alors en excès par rapport aux fonctions insaturées.

Selon l'invention, la réaction d'hydrosilylation est réalisée en présence d'une quantité catalytique d'un ou plusieurs complexes métallique à ligand silène. Par « quantité catalytique », on entend moins d'un équivalent molaire de métal par rapport à la quantité d'insaturations présentes dans le milieu réactionnel. La concentration en catalyseur dans la composition selon l'invention peut être comprise de façon typique entre 5 ppm et 10 ppm massiques, par rapport au réactif insaturé. Toutefois, de façon tout à fait avantageuse, les inventeurs ont découvert que des taux particulièrement faibles de catalyseur selon l'invention étaient suffisants pour obtenir un taux de conversion et un rendement d'hydrosilylation élevés. C'est pourquoi la concentration en catalyseur dans la composition selon l'invention peut être de façon très avantageuse inférieure à 10 ppm massiques, plus préférentiellement inférieure à 5 ppm massiques, plus préférentiellement comprise entre 0,1 ppm et 3 ppm massiques, et encore plus préférentiellement comprise entre 0,1 ppm et 1 ppm massiques par rapport à la masse du réactif insaturé.

Outre le composé insaturé comprenant au moins une fonction alcène et/ou au moins une fonction alcyne et le composé comprenant au moins une fonction hydrogénosilyle, cette composition peut éventuellement comprendre des additifs.

Selon un mode de réalisation de l'invention, on peut rajouter à la composition selon l'invention un inhibiteur ou retardateur de la réaction d'hydrosilylation. Ces composés sont connus de l'homme de l'art et sont disponibles commercialement. On peut citer par exemple les composés suivants : les polyorganosiloxanes substitués par au moins un alcényle pouvant se présenter éventuellement sous forme cyclique, le tétraméthylvinyltétrasiloxane étant particulièrement préféré ; la pyridine ; les phosphines et les phosphites organiques ; les amides insaturés ; les maléates alkylés ; et les alcools acétyléniques.

Les alcools acétyléniques (décrits par exemples dans les documents de brevet FR 1 528 464 et FR 2 372 874), qui font partie des bloqueurs thermiques de réaction d'hydrosilylation préférés, ont pour formule :

(R')(R")C(OH)-C≡CH

formule dans laquelle, R' est un radical alkyle linéaire ou ramifié, ou un radical phényle ; R" est un atome d'hydrogène ou un radical alkyle linéaire ou ramifié, ou un radical phényle ; les radicaux R', R" et l'atome de carbone situé en alpha de la triple liaison pouvant éventuellement former un cycle ; le nombre total d'atomes de carbone contenu dans R' et R" étant d'au moins 5, de préférence de 9 à 20.

Pour lesdits alcools acétyléniques, on peut citer à titre d'exemples :
- l'éthynyl-1-cyclohexanol-1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-2 butyne-3 ol-2 ;
- le méthyl-3 pentadécyne-1 ol-3 ; et
- le diallylmaléate ou dérivés du diallylmaléate.

Les compositions de l'invention peuvent en outre comprendre des additifs fonctionnels usuels. Comme familles d'additifs fonctionnels usuels, on peut citer :
- les charges ;
- les promoteurs d'adhérence ;
- les modulateurs d'adhérence ;
- les additifs de tenue thermique ;
- les additifs pour augmenter la consistance ;
- les pigments ;
- les additifs de tenue thermique, de tenue aux huiles ou de tenue au feu, par exemple les oxydes métalliques.

Les charges éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 µm (micromètres) et une surface spécifique BET supérieure à 30 m²/g, de préférence comprise entre 30 et 350 m²/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 µm (micromètres) et une surface BET inférieure à 100 m²/g. De façon pratique mais non limitative, les charges employées peuvent être un mélange de quartz et de silice. Les charges peuvent être traitées par tout produit approprié. Sur le plan pondéral, on préfère mettre en œuvre une quantité de charge comprise entre 1% et 50% en poids, de préférence entre 1% et 40% en poids par rapport à l'ensemble des constituants de la composition.

Plus généralement, sur le plan quantitatif, les compositions selon l'invention peuvent présenter des proportions standards dans le domaine technique considéré, sachant que l'on doit tenir compte également de l'application visée.

A part l'hydrosilylation, le complexe métallique peut également être utilisé selon la présente invention comme catalyseur de réactions de couplage, notamment les réactions choisies dans le groupe constitué par : la réaction de Heck, la réaction de Suzuki, l'amination d'halogénure d'aryle, l'arylation en alpha d'amide, le couplage de Sonogashira, le couplage de Kumada, la réaction de Stille et les réactions de couplage sur un alcyne. Pour mémoire, la réaction de Heck est un couplage entre un dérivé halogéné insaturé, notamment un halogénure d'aryle ou un triflate insaturé et un alcène ; la réaction de Suzuki est un couplage entre deux groupes aryle, notamment entre un acide boronique et un dérivé halogéné ; le couplage de Sonogashira est une réaction de couplage direct entre un halogénure d'aryle ou de vinyle et un alcyne terminal ; le couplage de Kumada est une réaction de couplage croisé entre un réactif de Grignard alkyle ou aryle et un halogénure d'aryle ou de vinyle ; la réaction de Stille est un couplage entre un composé organostannique et un halogénure. Les réactions de couplage sur un alcyne sont particulièrement utiles pour la synthèse de furane.

Par ailleurs, le complexe métallique peut aussi être utilisé selon la présente invention comme catalyseur de réactions de métathèse des oléfines. La métathèse des oléfines consiste en le clivage de la double liaison d'un alcène, suivie par la redistribution des fragments alcylidène formés. Parmi les réactions mettant en œuvre la métathèse des oléfines, on peut citer :
- les réactions de polymérisation, par exemple la polymérisation par ouverture de cycle par métathèse (ROMP) et la métathèse de polymérisation de diènes acycliques (ADMET) ;
- les réactions de couplage intramolécuaires, par exemple la métathèse de fermeture de cycle (RCM) ;
- les réactions de couplages intermoléculaires, par exemple le couplage par métathèse croisée (CM).

Le complexe métallique peut aussi être utilisé selon la présente invention comme catalyseur de réactions de polymérisation, par exemple la copolymérisation de l'éthylène et du monoxyde de carbone pour former des polycétones et la polymérisation radicalaire par transfert d'atome (ATRP), comme catalyseur d'hydrogénation et hydroformylation des alcènes et des arènes, comme catalyseur de déshalogénation d'halogénures d'aryle, comme catalyseur de cyclopropanation d'oléfines avec un diazoalcane, ou comme catalyseur d'arylation et d'alcénylation d'aldéhydes, notamment par des dérivés d'acides boroniques.

La présente invention a également pour objet l'une quelconque des réactions citées ci-dessus caractérisée par le fait qu'elle est catalysée par un complexe métallique tel que décrit ci-avant.

L'utilisation des complexes métalliques selon l'invention en tant que catalyseurs peut être particulièrement intéressante lorsque la réaction catalysée est une réaction de synthèse asymétrique.

D'autres buts, caractéristiques et avantages de l'invention apparaîtront des exemples suivants, qui sont donnés à titre purement illustratif et nullement limitatif.

### EXEMPLES

### Exemple 1 : Synthèse de ligand silène - ylure de phosphore 1

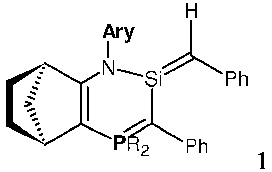

avec

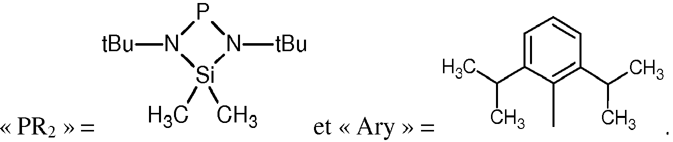

Toutes les manipulations ont été faites sous atmosphère inerte d'argon en utilisant de la verrerie de Schlenk ou des tubes RMN haute pression. Des solvants secs et exempts d'oxygène ont été employés. Les spectres RMN ¹H, ¹³C, ²⁹Si et ³¹P ont été enregistrés sur des spectromètres Avance 300. Les déplacements chimiques de RMN ¹H, ²⁹Si et ¹³C sont rapportés en ppm par rapport à un standard interne de SiMe₄. Les déplacements chimiques de RMN ³¹P sont exprimés en ppm par rapport à H₃PO₄ à 85%.

### Etape 1 : Synthèse de la chlorophosphine (a)

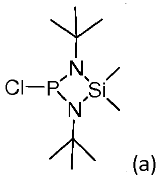

A une solution de Me₂Si(NHt-Bu)₂ (24,50 g ; 121,04 mmol) dans 80 mL de toluène à -78°C, on a ajouté 151,3 mL (242,08 mmol) de n-BuLi (1,6 M). Après retour à température ambiante, on a chauffé la solution à 50°C pendant 4 h. On a refroidi une solution de PCl₃ (11,7 mL ; 133,14 mmol) dans 30 mL de toluène à -110°C et on a ajouté goutte à goutte la solution précédente sans jamais remonter au-dessus de -100°C. On a laissé la solution revenir à température ambiante sur une nuit. On a évaporé le solvant sous vide et on a repris avec 150 mL de pentane. On a filtré et on a extrait la chlorophosphine (a) avec deux fois 100 mL de pentane. On a évaporé le pentane sous vide et on a purifié par une distillation sous vide pour obtenir une huile incolore (18,27 g ; Rendement : 56,6%).

### Etape 2 : Synthèse de l'imine (b)

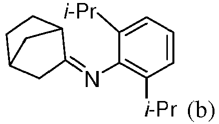

A une solution de norcamphor (53,02 g ; 481,34 mmol) dans 200 mL de toluène a été ajoutée la 2,6-diisopropylaniline (85,3 mL; 481,34 mmol) et une quantité catalytique d'acide para-toluène sulfonique. Le mélange a été chauffé 72 h à 135°C avec un Dean Stark. Le solvant a été évaporé et le solide a été repris au pentane. On a ensuite concentré la solution et celle-ci a été mise à cristalliser à -30°C pendant une nuit. On a obtenu l'imine (b) sous la forme de cristaux légèrement marron (119,22 g; Rendement : 92,0%).

### Etape 3 : Synthèse de l'iminophosphine (c)

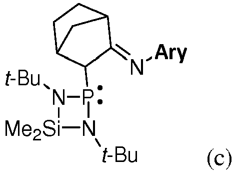

avec

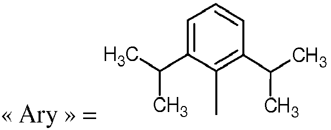

A une solution de l'imine (b) (18,40 g ; 68,38 mmol) dans 150 mL de THF à -78°C, on a ajouté 44,9 mL (71,79 mmol) de n-BuLi (1,6 M) et on a laissé revenir à température ambiante. Après 1 h d'agitation, on a refroidi à nouveau la solution à -78°C et on a ajouté la chlorophosphine (a) (18,23 g ; 68,38 mmol). On a laissé revenir à température ambiante et on a évaporé le solvant sous vide. On a repris le solide avec 120 mL de pentane et on a filtré. On a extrait avec trois fois 50 mL de pentane. On a ensuite purifié le produit en le lavant avec trois fois 40 mL d'acétonitrile pour obtenir un solide blanc (24,25 g ; Rendement : 71,0%).

### Etape 4 : Synthèse de la phosphino-N-silyl-énamine (d)

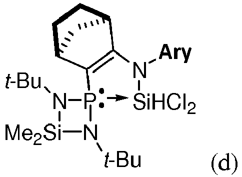

avec

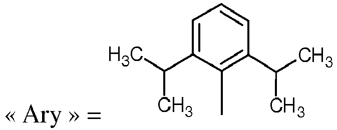

A une solution d'iminophosphine (c) (7,85 g ; 15,71 mmol) dans 80 mL de THF à -78°C, on a ajouté 9,8 mL (15,71 mmol) de n-BuLi (1,6 M) et on a laissé revenir à température ambiante. Après 1h d'agitation, on a refroidi à nouveau la solution à -78°C et on a ajouté un équivalent de SiHCl₃ (1,6 mL; 15,71 mmol). On a laissé revenir à température ambiante sous agitation pendant 1 h puis on a évaporé le solvant sous vide. On a repris le solide avec 60 mL de pentane et on a filtré. On a extrait avec deux fois 40 mL d'éther diéthylique. La solution a été concentrée et mise à cristalliser à -30°C. On obtient des cristaux jaunes pâles (7,81 g ; Rendement : 83,0%).

### Etape 5 : Synthèse de Phydrogéno-silylène (e)

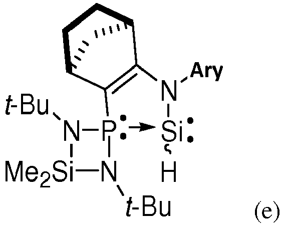

avec

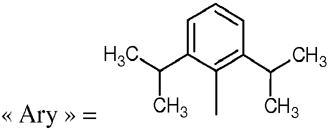

A une solution du composé (d) (2,46 g ; 4,10 mmol) dans 80 mL de THF, on a ajouté du magnésium en poudre (130 mg; 5,35 mmol). Après une nuit d'agitation à température ambiante, on a évaporé le solvant sous vide et on a repris avec 40 mL de pentane. La solution a été filtrée et le silylène (e) a été extrait avec deux fois 40 mL de pentane. Après évaporation du solvant, le résidu a été lavé avec deux fois 3 mL de pentane froid pour obtenir le silylène (e) analytiquement pur sous la forme d'un solide jaune pâle (1,52 g ; Rendement : 70,2%).

### Etape 6 : Synthèse du silylène (f)

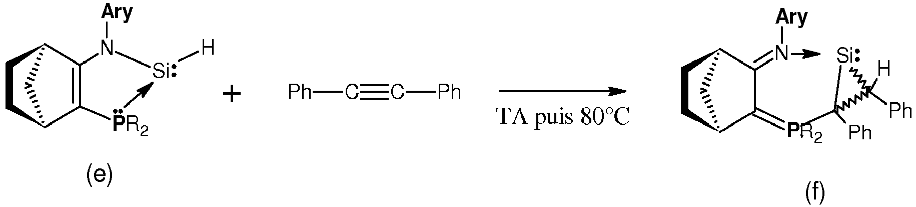

avec

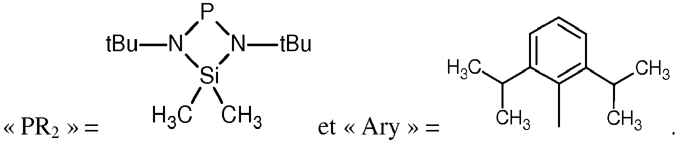

Du diphenylacetylène (1,58 mmol) a été additionné à une solution du composé (e) (0,83 g, 1,58 mmol) dans du toluène (5 ml) à température ambiante. La solution a été chauffée à 80°C. Après 15 heures à 80°C, tous les composés volatils ont été éliminés sous vide. Après lavage du résidu avec du pentane (7 ml), le composé silylène (f) a été obtenu sous forme de solide blanc (0,96 g, 81%).

### Etape 7 : Synthèse du silène - ylure de phosphore 1

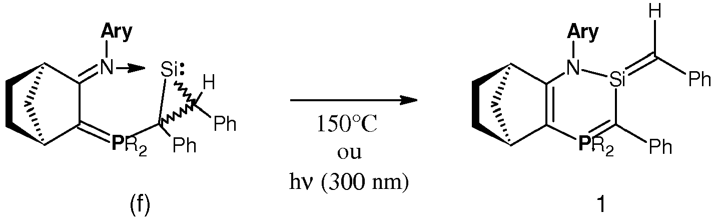

avec

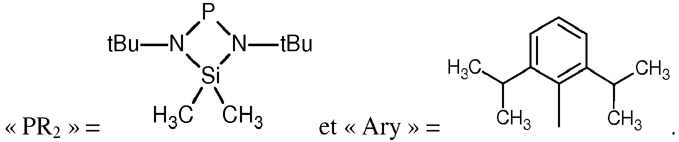

Un tube RMN haute pression contenant une solution de (f) (50,3 mg ; 0,071 mmol) dans du toluène a été soumis à 3 bars de N₂ et chauffé à 150°C pendant 8 heures ou bien irradié (hv = 300 nm) pendant 4 heures à température ambiante. Tous les composés volatils ont été éliminés sous vide. Après addition de pentane sec (0,6 ml) au résidu, le composé 1 analytiquement pur a été obtenu sous forme de cristaux orange (38,3 mg; 76%). Des cristaux adaptés pour une analyse de diffraction de rayons X ont été obtenus par cristallisation à partir d'une solution de pentane.

### Caractérisation du produit 1 :

### Température de fusion : 194-195°C.

RMN ¹H (300,18 MHz, C₆D₆, 25°C) : *δ* = 0,08 (s, 3H, CH_{3Si}), 0,16 (s, 3H, CH_{3Si}), 0,79 (s, 9H, 3 x CH_{3tBu}), 0,78 (overlapped, 1H, ½ CH_{2Norb}), 1,02 (d, *J*_{HH} = 6,9 Hz, 3H, CH_{3iPr}), 1,04 (d, *J*_{PH} = 0,5 Hz, 9H, 3 x CH_{3tBu}), 1,07 (d, *J*_{HH} = 6,9 Hz, 3H, CH_{3iPr}), 1,17 (m, 2H, ½ CH_{2CbridgeheadCP}), 1,25 (d, *J*_{HH} = 6,8 Hz, 3H, CH_{3iPr}), 1,30-1,52 (m, 3H, CH_{2CbridgeheadCN,} ½ CH_{2Norb}), 1,43 (d, *J*_{HH} = 6,8 Hz, 3H, CH_{3iPr}), 2,29 (brs, 1H, PCCH_{bridgehead}), 2,91 (brs, 1H, NCCH_{bridgehead}), 3,15 (m, 2H, CH_{iPr}, SiCH), 3,25 (sep, *J*_{HH} = 6,8 Hz, 1H, CH_{iPr}), 6,25-7,11 (11H, H_{Ar}), 7,46 ppm (d, *J*_{HH} = 7,9 Hz, 2H, H_{Ar}).

RMN ¹³C{¹H} (75,47 MHz, C₆D₆, 25°C) : *δ* = 3,6 (d, *J*_{PC} = 2,3 Hz, CH_{3Si}), 4,5 (d, *J*_{PC} = 1,8 Hz, CH_{3Si}), 24,0 (s, CH_{3iPr}), 24,3 (s, CH_{3iPr}), 25,5 (s, CH_{3iPr}), 25,9 (d, *J*_{PC} = 2,3 Hz, CH_{2CbridgeheadCP}), 26,0 (s, CH_{3iPr}), 27,6 (s, CH_{2CbridgeheadCN}), 28,7 (s, CH_{iPr}), 29,0 (s, CH_{iPr}), 31,7 (d, *J*_{PC} = 5,4 Hz, 3C, 3 x CH_{3tBu}), 32,2 (d, *J*_{PC} = 5,4 Hz, 3C, 3 x CH_{3tBu}), 43,8 (d, *J*_{PC} = 8,4 Hz, NCCH_{bridgehead}), 45,4 (d, *J*_{PC} = 11,1 Hz, PCCH_{bridgehead}), 47,9 (d, *J*_{PC} = 6,5 Hz, CH_{2Norb}), 52,2 (s, C_{tBu}), 52,5 (s, C_{tBu}), 54,5 (d, *J*_{PC} = 100,6 Hz, PCSi), 60,9 (brd, *J*_{PC} = 6,1 Hz, SiCH), 98,6 (d, *J*_{PC} = 125,8 Hz, PC=CN), 117,9 (s, CH_{Ar}), 123,3 (d, *J*_{PC} = 1,6 Hz, CH_{Ar}), 125,9 (s, 2 x CH_{Ar}), 127,4 (s, 2 x CH_{Ar}), 128,6 (s, CH_{Ar}), 128,7 (s, 2 x CH_{Ar}), 130,9 (s, CH_{Ar}), 131,0 (s, CH_{Ar}), 137,5 (s, C_{Ar}), 139,9 (d, J_{PC} = 2,6 Hz, C_{Ar}), 145,5 (s, C_{Ar}), 146,6 (s, C_{Ar}), 147,3 (s, C_{Ar}), 167,2 ppm (d, J_{PC} = 8,7 Hz, PC=CN).

RMN ²⁹Si{¹H} (59,63 MHz, C₆D₆, 25°C) : *δ* = 3,3 (s, Si_{Me}), 74,7 ppm (d, *J*_{PSi} = 24,0 Hz, Si_{CP}).

RMN ³¹P{¹H} (121,49 MHz, C₆D₆, 25°C) : *δ* = 27,4 ppm (s),

### Exemple 2 : Synthèse du complexe métallique à ligand silène - ylure de phosphore 2

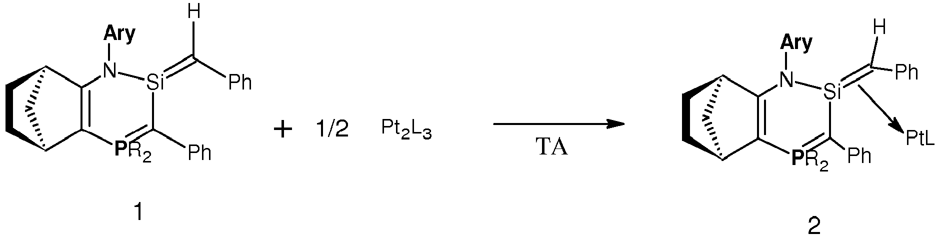

avec

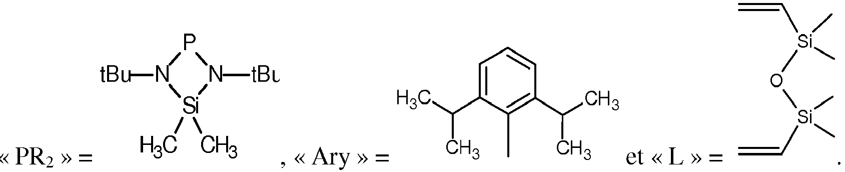

Dans un ballon contenant le produit 1 (45 mg ; 0,064 mmol), on a ajouté une solution de complexe platine(0)-1,3-divinyl-1,1,3,3-tétraméthyldisiloxane dans du xylène (0,91 M) à température ambiante. Tous les composés volatils ont ensuite été retirés sous vide et le solide a été lavé au pentane pour donner le produit 2 analytiquement pur sous la forme de cristaux jaunes (19,9 mg, 31%). Des cristaux du produit 2 adaptés pour une analyse de diffraction de rayons X ont été obtenus par cristallisation à partir d'une solution de pentane à -50°C.

Le complexe métallique 2 ainsi obtenu est stable sous argon.

### Caractérisation du produit 2 :

### Point de fusion : 204-205 °C.

RMN ¹H (300,18 MHz, CDCl₃, 25°C) : *δ* = -0,79 (s, 3H, CH_{3Si}), -0,18 (s, 3H, CH_{3Si}), -0,09 (s, 3H, CH_{3Si}), 0,31 (s, 3H, CH_{3Si}), 0,36 (s, 3H, CH_{3Si}), 0,50 (s, 3H, CH_{3Si}), 0,73 (d, *J*_{HH} = 7,0 Hz, 3H, CH_{3iPr}), 0,96-1,05 (m, 9H, 3 x CH_{3iPr}), 1,05 (m, 2H, CH_{2CbridgeheadCP}), 1,18 (s, 9H, 3 x CH_{3tBu}), 1,09 (br, ¹H, ½ CH_{2Norb}), 1,36 (d, J_{PH} = 0,5 Hz, 9H, 3 x CH_{3tBu}), 1,53 (br, ¹H, ½ CH_{2Norb}), 1,68 (m, 2H, CH_{2CbridgeheadCN}), 1,84 (br, ¹H, Si-CH=CH2), 2,22 (br, ¹H, ½ Si-CH=CH2), 2,42 (brs, ¹H, PCCH_{bridgehead}), 2,71 (sep, *J*_{HH} = 10,5 Hz, ¹H, CH_{iPr}), 2,82 (br, ¹H, ½ Si-CH=CH2), 3,15 (brs, ¹H, NCCH_{bridgehead}), 3,24 (br, ¹H, ½ Si-CH=CH2), 3,25 (br, ¹H, ½ Si-CH=CH2), 3,27 (br, ¹H, Si-CH=CH2), 3,44 (sep, *J*_{HH} = 10,8 Hz, ¹H, CH_{iPr}), 6,08-7,66 (13H, H_{Ar}),
RMN ¹³C{1H} (75,47 MHz, CDCl₃, -50°C) : *δ* = -2,91 (brs, CH_{3Si}), -1,35 (brs, CH_{3Si}), 1,20 (brs, CH_{3Si}), 2,65 (brs, CH_{3Si}), 4,24 (s, CH_{3Si}), 4,80 (brs, CH_{3Si}), 23,5 (s, CH_{3iPr}), 24,9 (s, CH_{3iPr}), 25,4 (br, CH_{2CbridgeheadCP}), 25,8 (s, CH_{3iPr}), 26,3 (s, CH_{3iPr}), 27,5 (s, CH_{2CbridgeheadCN}), 27,8 (s, CH_{iPr}), 28,0 (s, CH_{iPr}), 31,7 (d, *J*_{PC} = 4,5 Hz, 3C, 3 x CH_{3tBu}), 32,8 (d, *J*_{PC} = 4,3 Hz, 3 x CH_{3tBu}), 38,6 (d, *J*_{PC} = 106,0 Hz, PCSi), 42,9 (d, *J*_{PC} = 9,8 Hz, NCCH_{bridgehead}), 44,5 (s, Si-CH=CH2), 46,1 (d, *J*_{PC} = 10,5 Hz, PCCH_{bridgehead}), 47,3 (d, J_{PC} = 2,6 Hz, CH_{2Norb}), 51,5 (s, CtBu), 52,3 (s, CtBu), 56,7 (s, Si-CH=CH2), 66,3 (s, Si-CH=CH2), 79,9 (s, Si-CH=CH2), 98,4 (d, J_{PC} = 125,0 Hz, PC=CN), 119,8 (s, CH_{Ar}), 121,3 (s, CH_{Ar}), 123,8 (s, 2 x CH_{Ar}), 124,6 (s, CH_{Ar}), 126,5 (s, CH_{Ar}), 127,3 (s, 2 x CH_{Ar}), 127,5 (s, CH_{Ar}), 129,8 (s, CH_{Ar}), 129,9 (s, CH_{Ar}), 130,2 (s, CH_{Ar}), 132,3 (s, CH_{Ar}), 138,4 (s, C_{Ar}), 143,1 (s, C_{Ar}), 146,8 (s, C_{Ar}), 147,9 (s, C_{Ar}), 148,8 (s, C_{Ar}), 167,3 ppm (d, J_{PC} = 9,2 Hz, PC=CN),
RMN ₂₉Si{1H} (59,63 MHz, CDCl₃, -50°C) : *δ* = 0,7 (s, Si_{Me}), 3,7 (s, Si_{Me}), 6,7 ppm (s, Si_{Me}),
RMN ³¹P{1H} (121,49 MHz, CDCl₃, 25°C) : *δ* = 24,9 ppm (J_{PPt} = 21,0 Hz),

### Exemple 3 : Hydrosilylation du 1-octène avec du bis(triméthylsiloxy)méthyl-hydrogénosilane catalysé par un complexe de platine à ligand silylène

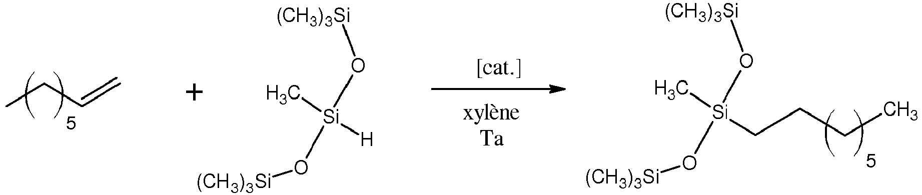

Dans cet exemple, le produit 2 obtenu dans l'exemple 2 a été utilisé comme catalyseur.

Des solutions contenant différentes concentrations de produit 2 dans du xylène ont été préparées : Une solution à 0,09 M a été obtenue en dissolvant 51 mg (0,046 mmol) du produit 2 dans 0,5 mL de xylène. Des solutions à 0,009 M et à 0,0009 M ont été préparées à partir de la première solution par dilution de 0,1 mL de la première solution dans respectivement 1 mL et 10 mL.

Dans une solution de 1-octène (1,85 mmol) et de bis(triméthylsiloxy)méthylhydrogénosilane (1,85 mmol) dans du xylène (1 mL), on a ajouté 1 µL de solution de catalyseur 2 dans du xylène à température ambiante. Le tout a été chauffé sous agitation à 72°C puis désactivé en exposant le mélange réactionnel à l'air. A la fin de la réaction, tous les composés volatils ont été éliminés sous vide et le produit analytiquement pur a été obtenu sous la forme d'un liquide incolore.

A l'issue de la réaction, le taux de conversion des réactifs et le rendement ont été déterminés par chromatographie en phase gazeuse.

Plusieurs essais ont été effectués en faisant varier la concentration en catalyseur. En outre, des essais comparatifs ont été faits en utilisant comme catalyseur le complexe de platine de Karstedt (Pt₂(DVTMS)₃). Les résultats sont reportés dans le tableau 1 :

**Tableau 1**

| **Essai** | **Catalyseur** | **Concentration en catalyseur** | | | **Durée de la réaction** | **Taux de conversion** | **Rendement** |
|---|---|---|---|---|---|---|---|
| | | ppm | % mol. | % mas. | | | |
| 1 | Produit 2 | 30 | 3.10⁻³ | 2,8.10⁻² | 20 min | >95% | 96% |
| 2 | Karstedt | 3 | 3.10⁻⁴ | 2,8.10⁻³ | 4 h | >95% | 91% |
| 3 | Produit 2 | | | 2,5.10⁻³ | 1 h | >95% | 91% |
| 4 | Karstedt | 0,3 | 3.10⁻⁵ | 2,8.10⁻⁴ | 24 h | 50% | 48% |
| 5 | Produit 2 | | | 2,5.10⁻⁴ | 14 h | 95% | 90% |

Les concentrations en catalyseur en % molaires et en % massiques sont exprimées par rapport au 1-octène.

On constate que des taux de conversion d'hydrosilylation élevés ont été obtenus en utilisant le produit 2 comme catalyseur, même avec des concentrations très faibles, de l'ordre de 2,5.10⁻⁴ % massiques. Comparativement au catalyseur de Karstedt, le complexe de platine à ligand silène a permis d'obtenir des taux de conversion plus élevés lorsque de très faibles teneurs de catalyseur ont été utilisées.

De plus, en comparant le taux de conversion obtenu avec le rendement, on constate que l'isomérisation du 1-octène est très limitée.

### Exemple 4 : Hydrosilylation du 1-octène avec du triéthylhydrogénosilane catalysé par un complexe de platine à ligand silène - ylure de phosphore

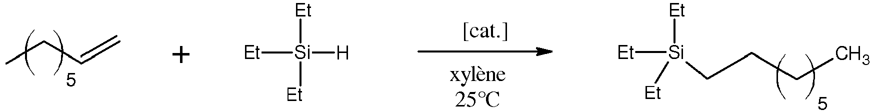

Dans cet exemple, le produit 2 obtenu dans l'exemple 2 a été utilisé comme catalyseur. Des solutions de différentes concentrations de catalyseur 2 dans du xylène ont été préparées comme dans l'exemple 3.

Dans une solution de 1-octène (2,00 mmol) et de triéthylhydrogénosilane (2,00 mmol) dans du xylène (1 mL), on a ajouté 10,0 µL de solution de catalyseur 2 dans du xylène à température ambiante. Le tout a été agité à 25°C puis désactivé en exposant le mélange réactionnel à l'air. A la fin de la réaction, tous les composés volatils ont été éliminés sous vide et le produit analytiquement pur a été obtenu sous la forme d'un liquide incolore.

A l'issue de la réaction, le taux de conversion des réactifs et le rendement ont été déterminés par chromatographie en phase gazeuse.

Plusieurs essais ont été effectués en faisant varier la concentration en catalyseur. En outre, des essais comparatifs ont été faits en utilisant comme catalyseur le complexe de platine de Karstedt (Pt₂(DVTMS)₃). Les résultats sont reportés dans le tableau 2 :

**Tableau 2**

| Essai | Catalyseur | Concentration en catalyseur | | | Durée de la réaction | Taux de conversion | Rendement |
|---|---|---|---|---|---|---|---|
| | | ppm | % mol. | % mas. | | | |
| 1 | Produit 2 | 300 | 3.10⁻² | 2,8.10⁻¹ | 2 h | 60% | 53% |
| 2 | Karstedt | 300 | 3.10⁻² | 2,5.10⁻¹ | 20 min | 0% | - |
| 3 | Karstedt | | | | 1 h | 3% | - |
| 5 | Karstedt | | | | 3 jours | 9% | 8% |

Les concentrations en catalyseur en % molaires et en % massiques sont exprimées par rapport au 1-octène.

On constate que la réaction entre le 1-octène et le triéthylhydrogénosilane est catalysée à température ambiante par le complexe métallique à ligand silène - ylure de phosphore, alors que le catalyseur de Karstedt présente une réactivité très faible.

## Revendications

1. Utilisation en tant que catalyseur d'un complexe métallique comprenant au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, **caractérisé en ce qu'**au moins un ligand comprend une structure silène qui est un silène - ylure de phosphore, ledit ligand étant le composé de formule (V) : 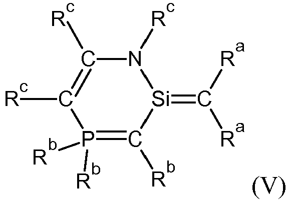 dans laquelle chaque R^{a} et chaque R^{b} est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque R^{c} peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes R^{a}, les groupes R^{b} et les groupes R^{c}, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

2. Utilisation selon la revendication 1, **caractérisée en ce que** ledit ligand comprenant une structure silène est le composé de formule (VI) : 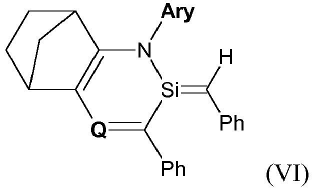 dans laquelle le symbole « Q » représente 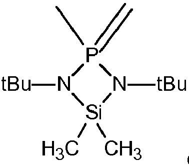 et
le symbole « Ary »représente

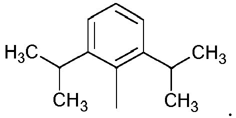

3. Utilisation selon l'une quelconque des revendications 1 et 2, **caractérisée en ce que** le complexe métallique est le composé de formule (VII) : 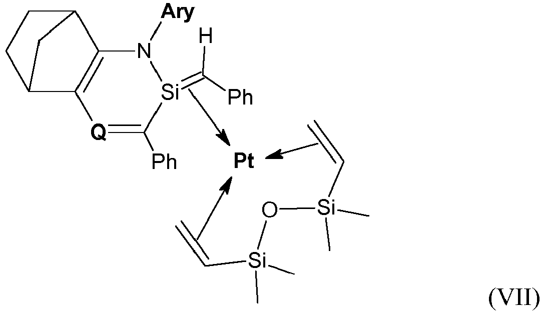 dans laquelle le symbole « Q » représente 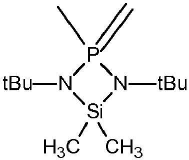 et
le symbole « Ary »représente

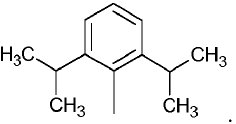

4. Utilisation selon l'une quelconque des revendications 1 à 3, **caractérisée en ce que** le complexe métallique est utilisé comme catalyseur d'une réaction d'hydrosilylation.

5. Procédé d'hydrosilylation d'un composé insaturé comprenant au moins une fonction alcène et/ou au moins une fonction alcyne, avec un composé comprenant au moins une fonction hydrogénosilyle, ledit procédé étant **caractérisé par le fait qu'**il est catalysé par un complexe métallique comprenant au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, **caractérisé en ce qu'**au moins un ligand comprend une structure silène qui est un silène - ylure de phosphore, ledit ligand étant le composé de formule (V) : 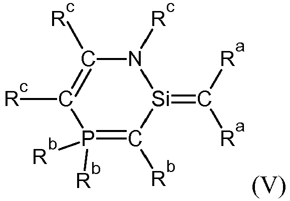 dans laquelle chaque R^{a} et chaque R^{b} est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque R^{c} peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes R^{a}, les groupes R^{b} et les groupes R^{c}, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

6. Procédé selon la revendication 5, dans lequel le composé comprenant au moins une fonction hydrogénosilyle est choisi dans le groupe constitué par :
- un composé silane ou polysilane comprenant au moins un atome d'hydrogène lié à un atome de silicium ;
- un composé siloxane comprenant au moins un atome d'hydrogène lié à un atome de silicium, de préférence un composé polyorganosiloxane comprenant par molécule au moins deux fonctions hydrogénosilyle ;
- un polymère organique comprenant des fonctions hydrogénosilyles en positions terminales.

7. Composition comprenant :
- au moins un composé insaturé comprenant au moins une fonction alcène et/ou au moins une fonction alcyne,
- au moins un composé comprenant au moins une fonction hydrogénosilyle, et
- un catalyseur choisi parmi les complexes métalliques comprenant au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, **caractérisé en ce qu'**au moins un ligand comprend une structure silène qui est un silène - ylure de phosphore, ledit ligand étant le composé de formule (V) : 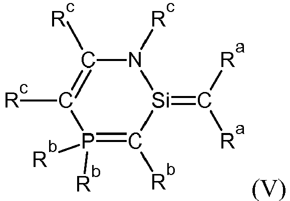 dans laquelle chaque R^{a} et chaque R^{b} est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque R^{c} peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy.
étant entendu que :
- deux groupes ou plus choisis parmi les groupes R^{a}, les groupes R^{b} et les groupes R^{c}, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

8. Composition selon la revendication 7, **caractérisée en ce que** la concentration en catalyseur dans la composition est inférieure à 10 ppm massiques, plus préférentiellement inférieure à 5 ppm massiques, plus préférentiellement comprise entre 0,1 ppm et 3 ppm massiques, et encore plus préférentiellement comprise entre 0,1 ppm et 1 ppm massiques par rapport à la masse de réactif insaturé.

9. Complexe métallique comprenant au moins un atome métallique choisi parmi les métaux dans le groupe constitué par Pt, Pd, Ni, Rh, Ru, Os et Ir, plus préférentiellement dans le groupe constitué par Pt et Pd et encore plus préférentiellement le métal est Pt et un ou plusieurs ligands, **caractérisé en ce qu'**au moins un ligand comprend une structure silène - ylure de phosphore, ledit ligand étant le composé de formule (V) : 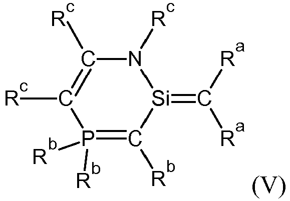 dans laquelle chaque R^{a} et chaque R^{b} est choisi indépendamment parmi :
- un atome d'hydrogène,
- un atome d'halogène,
- un groupe alkyle,
- un groupe cycloalkyle,
- un groupe cycloalkyle-alkyle,
- un groupe aryle, et
- un groupe aryle-alkyle ;
chaque R^{c} peut être choisi indépendamment parmi :
- un atome d'hydrogène,
- un atome d'halogène,
- un groupe alkyle,
- un groupe cycloalkyle,
- un groupe cycloalkyle-alkyle,
- un groupe aryle,
- un groupe aryle-alkyle,
- un groupe acyle,
- un groupe amine,
- un groupe hydroxy,
- par un groupe alcoxy,
étant entendu que :
- deux groupes ou plus choisis parmi les groupes R^{a}, les groupes R^{b} et les groupes R^{c}, avec les atomes auxquels ils sont liés, peuvent former un cycle monocyclique ou polycyclique, constitué de 3 à 20 chainons, comprenant éventuellement une ou plusieurs insaturations, et comprenant éventuellement un ou plusieurs hétéroatomes choisis parmi O, N, Si et P, le groupe cycle monocyclique ou polycyclique pouvant éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxy ou par un groupe alcoxy.

## Patentansprüche

1. Verwendung eines Metallkomplexes als Katalysator, der mindestens ein Metallatom, das aus den Metallen der Gruppe Pt, Pd, Ni, Rh, Ru, Os und Ir ausgewählt ist, vorzugsweise aus der Gruppe Pt und Pd und noch bevorzugter ist das Metall Pt, und einen oder mehrere Liganden umfaßt, **dadurch gekennzeichnet, daß** mindestens ein Ligand eine Silenstruktur umfaßt, die ein Silen-Phosphor-Ylid ist, wobei der Ligand die Verbindung der Formel (V) ist: 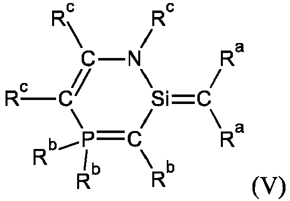 worin jedes R^{a} und jedes R^{b} unabhängig voneinander ausgewählt ist aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe, und
- eine Aryl-Alkyl-Gruppe;
jedes R^{c} kann unabhängig ausgewählt sein aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe,
- eine Aryl-Alkyl-Gruppe,
- eine Acylgruppe,
- eine Aminogruppe,
- eine Hydroxygruppe,
- durch eine Alkoxygruppe,
mit der Maßgabe, dass :
- zwei oder mehr Gruppen, ausgewählt aus R^{a}-Gruppen, R^{b}-Gruppen und R^{c}-Gruppen, zusammen mit den Atomen, an die sie gebunden sind, einen monocyclischen oder polycyclischen Ring bilden können, der aus 3 bis 20 Gliedern besteht, gegebenenfalls eine oder mehrere Ungesättigtheiten umfasst und gegebenenfalls ein oder mehrere Heteroatome, ausgewählt aus O, N, Si und P, umfasst, wobei die monocyclische oder polycyclische Ringgruppe gegebenenfalls ein- oder mehrfach durch Halogen, Alkyl, Cycloalkyl, Cycloalkyl-alkyl, Aryl, Aryl-alkyl, Acyl, Amino, Hydroxy oder Alkoxy substituiert sein kann.

2. Verwendung nach Anspruch 1, **dadurch gekennzeichnet, daß** der Ligand, der eine Silenstruktur aufweist, die Verbindung der Formel (VI) ist: 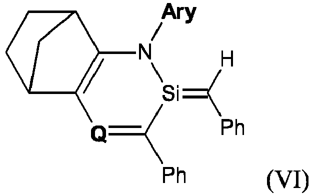 wobei das Symbol "Q" für 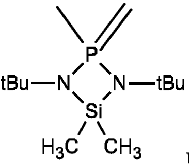 und
das Symbol "Ary" darstellt

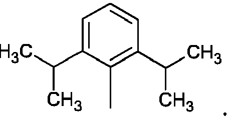

3. Verwendung nach einem der Ansprüche 1 und 2, **dadurch gekennzeichnet, daß** der Metallkomplex die Verbindung der Formel (VII) ist: 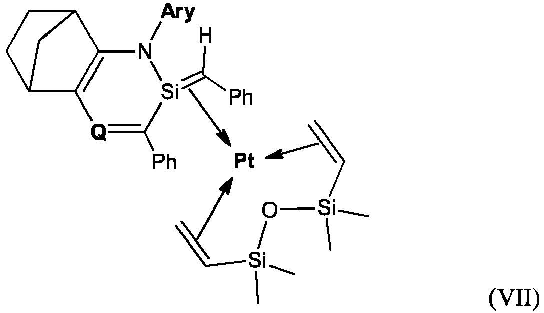 wobei das Symbol "Q" für und 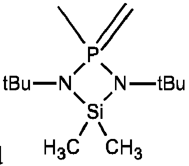 das Symbol "Ary" darstellt

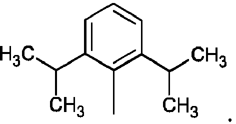

4. Verwendung nach einem der Ansprüche 1 bis 3, **dadurch gekennzeichnet, dass** der Metallkomplex als Katalysator für eine Hydrosilylierungsreaktion verwendet wird.

5. Verfahren zur Hydrosilylierung einer ungesättigten Verbindung, die mindestens eine Alkenfunktion und/oder mindestens eine Alkinfunktion umfasst, mit einer Verbindung, die mindestens eine Wasserstoffsilylfunktion umfasst, wobei das Verfahren **dadurch gekennzeichnet ist, dass** es durch einen Metallkomplex katalysiert wird, der mindestens ein Metallatom umfasst, das aus den Metallen der Gruppe bestehend aus Pt ausgewählt ist, Pd, Ni, Rh, Ru, Os und Ir, vorzugsweise aus der Gruppe bestehend aus Pt und Pd und noch bevorzugter ist das Metall Pt und ein oder mehrere Liganden, **dadurch gekennzeichnet, daß** mindestens ein Ligand eine Silenstruktur umfaßt, die ein Silen-Phosphor-Ylid ist, wobei der Ligand die Verbindung der Formel (V) ist: 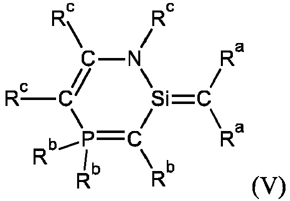 worin jedes R^{a} und jedes R^{b} unabhängig voneinander ausgewählt ist aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe, und
- eine Aryl-Alkyl-Gruppe;
jedes R^{c} kann unabhängig ausgewählt sein aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe,
- eine Aryl-Alkyl-Gruppe,
- eine Acylgruppe,
- eine Aminogruppe,
- eine Hydroxygruppe,
- durch eine Alkoxygruppe,
mit der Maßgabe, dass :
- zwei oder mehr Gruppen, ausgewählt aus R^{a}-Gruppen, R^{b}-Gruppen und R^{c}-Gruppen, zusammen mit den Atomen, an die sie gebunden sind, einen monocyclischen oder polycyclischen Ring bilden können, der aus 3 bis 20 Gliedern besteht, gegebenenfalls eine oder mehrere Ungesättigtheiten umfasst und gegebenenfalls ein oder mehrere Heteroatome, ausgewählt aus O, N, Si und P, umfasst, wobei die monocyclische oder polycyclische Ringgruppe gegebenenfalls ein- oder mehrfach durch Halogen, Alkyl, Cycloalkyl, Cycloalkyl-alkyl, Aryl, Aryl-alkyl, Acyl, Amino, Hydroxy oder Alkoxy substituiert sein kann.

6. Verfahren nach Anspruch 5, wobei die Verbindung, die mindestens eine Wasserstoffsilylfunktion umfasst, ausgewählt ist aus der Gruppe bestehend aus:
- eine Silan- oder Polysilanverbindung, die mindestens ein an ein Siliciumatom gebundenes Wasserstoffatom enthält;
- eine Siloxanverbindung mit mindestens einem an ein Siliciumatom gebundenen Wasserstoffatom, vorzugsweise eine Polyorganosiloxanverbindung mit mindestens zwei Wasserstoffsilylfunktionen pro Molekül;
- ein organisches Polymer, das endständige Wasserstoffsilylfunktionen enthält.

7. Eine Zusammensetzung, die Folgendes umfasst:
- mindestens eine ungesättigte Verbindung mit mindestens einer Alkenfunktion und/oder mindestens einer Alkinfunktion,
- mindestens eine Verbindung, die mindestens eine Wasserstoffsilylfunktion enthält, und
- einen Katalysator, ausgewählt aus Metallkomplexen, umfassend mindestens ein Metallatom, ausgewählt aus Metallen der Gruppe, bestehend aus Pt, Pd, Ni, Rh, Ru, Os und Ir, vorzugsweise aus der Gruppe, bestehend aus Pt und Pd, und noch bevorzugter ist das Metall Pt und ein oder mehrere Liganden, **dadurch gekennzeichnet, dass** mindestens ein Ligand eine Silenstruktur umfasst, die ein Silen-Phosphor-Ylid ist, wobei der Ligand die Verbindung der Formel (V) ist: 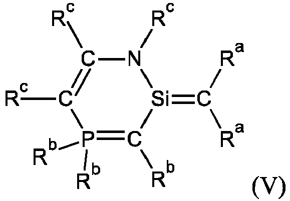 worin jedes R^{a} und jedes R^{b} unabhängig voneinander ausgewählt ist aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe, und
- eine Aryl-Alkyl-Gruppe;
jedes R^{c} kann unabhängig ausgewählt sein aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe,
- eine Aryl-Alkyl-Gruppe,
- eine Acylgruppe,
- eine Aminogruppe,
- eine Hydroxygruppe,
- durch eine Alkoxygruppe.
mit der Maßgabe, dass:
- zwei oder mehr Gruppen, ausgewählt aus R^{a}-Gruppen, R^{b}-Gruppen und R^{c}-Gruppen, zusammen mit den Atomen, an die sie gebunden sind, einen monocyclischen oder polycyclischen Ring bilden können, der aus 3 bis 20 Gliedern besteht, gegebenenfalls eine oder mehrere Ungesättigtheiten umfasst und gegebenenfalls ein oder mehrere Heteroatome, ausgewählt aus O, N, Si und P, umfasst, wobei die monocyclische oder polycyclische Ringgruppe gegebenenfalls ein- oder mehrfach durch Halogen, Alkyl, Cycloalkyl, Cycloalkyl-alkyl, Aryl, Aryl-alkyl, Acyl, Amino, Hydroxy oder Alkoxy substituiert sein kann.

8. Zusammensetzung nach Anspruch 7, **dadurch gekennzeichnet, dass** die Konzentration des Katalysators in der Zusammensetzung weniger als 10 ppm, bezogen auf die Masse, beträgt, mehr bevorzugt weniger als 5 ppm, bezogen auf die Masse, mehr bevorzugt zwischen 0,1 ppm und 3 ppm, bezogen auf die Masse, und noch mehr bevorzugt zwischen 0,1 ppm und 1 ppm, bezogen auf die Masse des ungesättigten Reagens.

9. Metallkomplex, umfassend mindestens ein Metallatom, ausgewählt aus Metallen in der Gruppe, bestehend aus Pt, Pd, Ni, Rh, Ru, Os und Ir, bevorzugter in der Gruppe, bestehend aus Pt und Pd, und noch bevorzugter ist das Metall Pt und ein oder mehrere Liganden, **dadurch gekennzeichnet, dass** mindestens ein Ligand eine Silen-Phosphor-Ylid-Struktur umfasst, wobei der Ligand die Verbindung der Formel (V) ist: 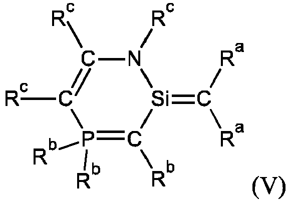 worin jedes R^{a} und jedes R^{b} unabhängig voneinander ausgewählt ist aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe, und
- eine Aryl-Alkyl-Gruppe;
jedes R^{c} kann unabhängig ausgewählt sein aus:
- ein Wasserstoffatom,
- ein Halogenatom,
- eine Alkylgruppe,
- eine Cycloalkylgruppe,
- eine Cycloalkyl-Alkyl-Gruppe,
- eine Arylgruppe,
- eine Aryl-Alkyl-Gruppe,
- eine Acylgruppe,
- eine Aminogruppe,
- eine Hydroxygruppe,
- durch eine Alkoxygruppe,
mit der Maßgabe, dass :
- zwei oder mehr Gruppen, ausgewählt aus R^{a}-Gruppen, R^{b}-Gruppen und R^{c}-Gruppen, zusammen mit den Atomen, an die sie gebunden sind, einen monocyclischen oder polycyclischen Ring bilden können, der aus 3 bis 20 Gliedern besteht, gegebenenfalls eine oder mehrere Ungesättigtheiten umfasst und gegebenenfalls ein oder mehrere Heteroatome, ausgewählt aus O, N, Si und P, umfasst, wobei die monocyclische oder polycyclische Ringgruppe gegebenenfalls ein- oder mehrfach durch Halogen, Alkyl, Cycloalkyl, Cycloalkyl-alkyl, Aryl, Aryl-alkyl, Acyl, Amino, Hydroxy oder Alkoxy substituiert sein kann.

## Claims

1. The use as catalyst of a metal complex comprising at least one metal atom chosen from the metals from the group consisting of Pt, Pd, Ni, Rh, Ru, Os and Ir, more preferably from the group consisting of Pt and Pd and even more preferably the metal is Pt and one or more ligands, **characterized in that** at least one ligand comprises a silene structure which is a silene-phosphorus ylide, said ligand being a compound of formula (V): 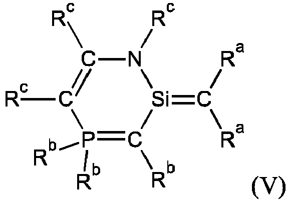 in which each R^{a} and each R^{b} is independently chosen from,
- a hydrogen atom,
- a halogen atom,
- an alkyl group,
- a cycloalkyl group,
- a cycloalkylalkyl group,
- an aryl group, and
- an arylalkyl group,
each R^{c} can be independently chosen from:
- a hydrogen atom,
- a halogen atom,
- an alkyl group,
- a cycloalkyl group,
- a cycloalkylalkyl group,
- an aryl group,
- an arylalkyl group,
- an acyl group,
- an amine group,
- a hydroxyl group,
- by an alkoxy group,
it being understood that:
two groups or more chosen from the R^{a} groups, the R^{b} groups and the R^{c} groups, with the atoms to which they are bonded, can form a monocyclic or polycyclic ring, consisting of 3 to 20 ring members, optionally comprising one or more unsaturations and optionally comprising one or more heteroatoms chosen from O, N, Si and P, it being possible for the monocyclic or polycyclic ring group to be optionally substituted one or more times by a halogen atom, by an alkyl group, by a cycloalkyl group, by a cycloalkylalkyl group, by an aryl group, by an arylalkyl group, by an acyl group, by an amine group, by an hydroxyl group or by an alkoxy group.

2. The use as claimed in claim 1, **characterized in that** said ligand comprising a silene structure is the compound of formula (VI): 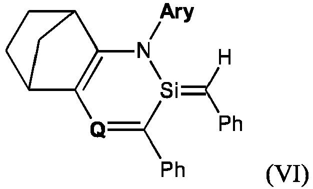 in which the symbol "Q" represents 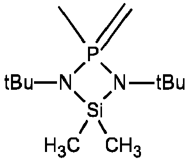 and
the symbol "Ary" represents

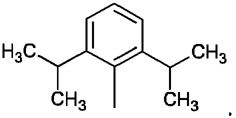

3. The use as claimed in either one of claims 1 and 2, **characterized in that** the metal complex is the compound of formula (VII): 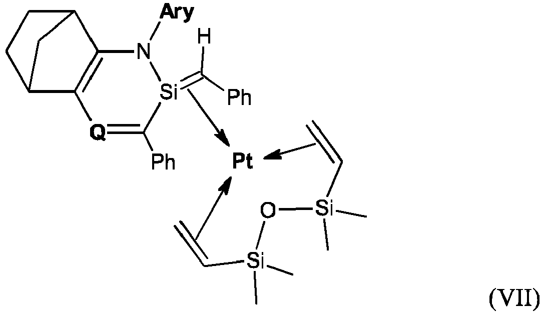 in which the symbol "Q" represents 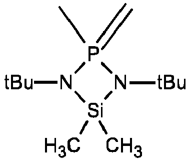 and
the symbol "Ary" represents

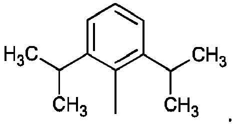

4. The use as claimed in any one of claims 1 to 3, **characterized in that** the metal complex is used as catalyst for a hydrosilylation reaction.

5. A process for the hydrosilylation of an unsaturated compound comprising at least one alkene functional group and/or at least one alkyne functional group with a compound comprising at least one hydrosilyl functional group, said process being **characterized in that** it is catalyzed by a metal complex comprising at least one metal atom chosen from the metals from the group consisting of Pt, Pd, Ni, Rh, Ru, Os and Ir, more preferably from the group consisting of Pt and Pd and even more preferably the metal is Pt and one or more ligands, **characterized in that** at least one ligand comprises a silene structure which is a silene-phosphorus ylide, said ligand being a compound of formula (V): 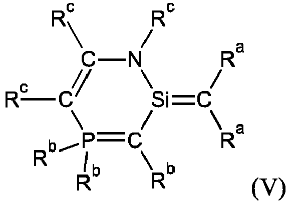 in which each R^{a} and each R^{b} is independently chosen from,
- a hydrogen atom,
- a halogen atom,
- an alkyl group,
- a cycloalkyl group,
- a cycloalkylalkyl group,
- an aryl group, and
- an arylalkyl group,
each R^{c} can be independently chosen from:
- a hydrogen atom,
- a halogen atom,
- an alkyl group,
- a cycloalkyl group,
- a cycloalkylalkyl group,
- an aryl group,
- an arylalkyl group,
- an acyl group,
- an amine group,
- a hydroxyl group,
- by an alkoxy group,
it being understood that:
two groups or more chosen from the R^{a} groups, the R^{b} groups and the R^{c} groups, with the atoms to which they are bonded, can form a monocyclic or polycyclic ring, consisting of 3 to 20 ring members, optionally comprising one or more unsaturations and optionally comprising one or more heteroatoms chosen from O, N, Si and P, it being possible for the monocyclic or polycyclic ring group to be optionally substituted one or more times by a halogen atom, by an alkyl group, by a cycloalkyl group, by a cycloalkylalkyl group, by an aryl group, by an arylalkyl group, by an acyl group, by an amine group, by an hydroxyl group or by an alkoxy group.

6. The process as claimed in claim 5, in which the compound comprising at least one hydrosilyl functional group is chosen from the group consisting of:
- a silane or polysilane compound comprising at least one hydrogen atom bonded to a silicon atom;
- a siloxane compound comprising at least one hydrogen atom bonded to a silicon atom, preferably a polyorganosiloxane compound comprising, per molecule, at least two hydrosilyl functional groups;
- an organic polymer comprising hydrosilyl functional groups at the terminal positions.

7. A composition comprising:
- at least one unsaturated compound comprising at least one alkene functional group and/or at least one alkyne functional group,
- at least one compound comprising at least one hydrosilyl functional group, and
- a catalyst chosen from the metal complexes comprising at least one metal atom chosen from the metals from the group consisting of Pt, Pd, Ni, Rh, Ru, Os and Ir, more preferably from the group consisting of Pt and Pd and even more preferably the metal is Pt and one or more ligands, **characterized in that** at least one ligand comprises a silene structure which is a silene-phosphorus ylide, said ligand being a compound of formula (V): 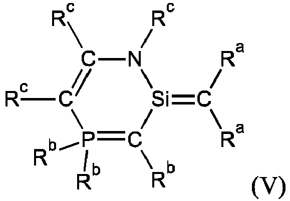 in which each R^{a} and each R^{b} is independently chosen from,
- a hydrogen atom,
- a halogen atom,
- an alkyl group,
- a cycloalkyl group,
- a cycloalkylalkyl group,
- an aryl group, and
- an arylalkyl group,
each R^{c} can be independently chosen from:
- a hydrogen atom,
- a halogen atom,
- an alkyl group,
- a cycloalkyl group,
- a cycloalkylalkyl group,
- an aryl group,
- an arylalkyl group,
- an acyl group,
- an amine group,
- a hydroxyl group,
- by an alkoxy group,
it being understood that:
- two groups or more chosen from the R^{a} groups, the R^{b} groups and the R^{c} groups, with the atoms to which they are bonded, can form a monocyclic or polycyclic ring, consisting of 3 to 20 ring members, optionally comprising one or more unsaturations and optionally comprising one or more heteroatoms chosen from O, N, Si and P, it being possible for the monocyclic or polycyclic ring group to be optionally substituted one or more times by a halogen atom, by an alkyl group, by a cycloalkyl group, by a cycloalkylalkyl group, by an aryl group, by an arylalkyl group, by an acyl group, by an amine group, by an hydroxyl group or by an alkoxy group.

8. The composition as claimed in claim 7, **characterized in that** the concentration of catalyst in the composition is less than 10 ppm by weight, more preferably less than 5 ppm by weight, more preferably between 0.1 ppm and 3 ppm by weight and even more preferably between 0.1 ppm and 1 ppm by weight, with respect to the weight of unsaturated reactant.

9. A metal complex comprising at least one metal atom chosen from the metals from the group consisting of Pt, Pd, Ni, Rh, Ru, Os and Ir, more preferably from the group consisting of Pt and Pd and even more preferably the metal is Pt and one or more ligands, **characterized in that** at least one ligand comprises a silene-phosphorus ylide structure, said ligand being a compound of formula (V): 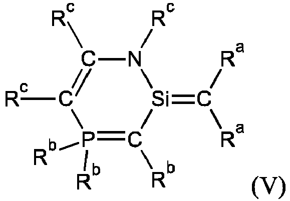 in which each R^{a} and each R^{b} is independently chosen from,
- a hydrogen atom,
- a halogen atom,
- an alkyl group,
- a cycloalkyl group,
- a cycloalkylalkyl group,
- an aryl group, and
- an arylalkyl group,
each R^{c} can be independently chosen from:
- a hydrogen atom,
- a halogen atom,
- an alkyl group,
- a cycloalkyl group,
- a cycloalkylalkyl group,
- an aryl group,
- an arylalkyl group,
- an acyl group,
- an amine group,
- a hydroxyl group,
- by an alkoxy group,
it being understood that:
two groups or more chosen from the R^{a} groups, the R^{b} groups and the R^{c} groups, with the atoms to which they are bonded, can form a monocyclic or polycyclic ring, consisting of 3 to 20 ring members, optionally comprising one or more unsaturations and optionally comprising one or more heteroatoms chosen from O, N, Si and P, it being possible for the monocyclic or polycyclic ring group to be optionally substituted one or more times by a halogen atom, by an alkyl group, by a cycloalkyl group, by a cycloalkylalkyl group, by an aryl group, by an arylalkyl group, by an acyl group, by an amine group, by an hydroxyl group or by an alkoxy group.
